# EUROPEAN PATENT APPLICATION

(11) **EP 4 585 820 A1**
(43) Date of publication of application: **16.07.2025**
(21) Application number: 23862983.6
(22) Date of filing: 28.08.2023
(51) Int. Cl.: F16C 41/00, F16C 19/06, F16C 33/58

(54) **BEARING DEVICE**

(30) Priority: 06.09.2022 JP 2022141382
(71) Applicant: NTN Corporation, Osaka-shi Osaka 530-0005 (JP)
(72) Inventor: KOIKE, Takashi, Iwata-shi, Shizuoka 438-8510 (JP); FUKUSHIMA, Yasuyuki, Iwata-shi, Shizuoka 438-8510 (JP)
(74) Representative: Bockhorni & Brüntjen Partnerschaft Patentanwälte mbB
(86) International application number: PCT/JP2023/030893
(87) International publication number: WO 2024/053444

(57) **Abstract**

A bearing device includes a bearing and a sensor unit (6). The sensor unit (6) is fixed to a stationary ring (3) of the bearing, and retains a sensor (15) that monitors a state of the bearing. The sensor unit (6) includes a cage member (12) including a side plate portion (12A) and a circumferential portion. The circumferential portion of the cage member (12) fits in the stationary ring (3). A part of a first fit surface (12Ca) of the circumferential portion to fit in the stationary ring (3) and a part of a second fit surface (3a) of the stationary ring (3) to fit on the circumferential portion are in contact with each other and another part of the first fit surface and another part of the second fit surface are spaced from each other.

## Description

### TECHNICAL FIELD

The present disclosure relates to a bearing device.

### BACKGROUND ART

A bearing device is known that includes, for the purpose of monitoring the state of a rolling bearing for the sake of device safety, a sensor provided at a position adjacent to the bearing. The bearing device includes an electric generator and the sensor. The bearing device may have a configuration that enables data detected by the sensor to be transmitted wirelessly for the purpose of transmitting the data with high convenience.

Japanese Patent Laying-Open No. 2003-269477 (PTL 1) proposes a rolling bearing equipped with an electric generator that is applicable to a vehicular wheel bearing device. Japanese Patent Laying-Open No. 2003-269477 discloses a configuration in which the outer circumferential surface of a stator (magnetic ring) in which a generator's coil is contained has a step. Specifically, Japanese Patent Laying-Open No. 2003-269477 discloses that the outer circumferential surface of the stator is bent to have a portion extending in the radial direction and a portion extending in the axial direction crossing the radial direction, so that the outer circumferential surface fits to the shape of the inner circumferential surface of an outer member of the vehicular wheel bearing. With this bending, the axially-extending portion of the outer circumferential surface of the stator forms a stair-like step in its cross section.

### CITATION LIST

### PATENT LITERATURE

PTL 1: Japanese Patent Laying-Open No. 2003-269477

### SUMMARY OF INVENTION

### TECHNICAL PROBLEM

According to Japanese Patent Laying-Open No. 2003-269477, at least the outer circumferential surface of the stator extends in the axial direction. A portion of the outer circumferential surface of the stator that is in contact with the inner circumferential surface of the outer member does not have a step, i.e., the whole of the portion in contact therewith is almost flat. In other words, the portion of the outer circumferential surface of the stator that is in contact therewith is entirely in contact with the outer member. Therefore, when the stator is fixed to the outer member by means of press-fit, for example, the press load may be excessive, resulting in the stator deformed to be inclined with respect to the outer member. In such a case, desired properties of the bearing device may not be obtained.

The present disclosure is given in view of the above problem. An object of the present disclosure is to provide a bearing device in which a sensor unit including a stator is press-fit without an excessive press load, and the sensor unit is installed easily without being deformed.

### SOLUTION TO PROBLEM

A bearing device according to the present disclosure includes a bearing and a sensor unit. The bearing includes an outer ring, an inner ring, and a rolling element. The sensor unit is fixed to a stationary ring being one of the outer ring or the inner ring, and retains a sensor that monitors a state of the bearing. The sensor unit includes a cage member including a side plate portion and a circumferential portion extending in a direction crossing the side plate portion. The circumferential portion of the cage member fits in the stationary ring. The circumferential portion includes a first fit surface that fits in the stationary ring, and the stationary ring includes a second fit surface that fits on the circumferential portion, and a part of the first fit surface and a part of the second fit surface are in contact with each other and another part of the first fit surface and another part of the second fit surface are spaced from each other.

### ADVANTAGEOUS EFFECTS OF INVENTION

According to the present disclosure, the bearing device can be provided in which the sensor unit including a stator is press-fit without an excessive press load, and the sensor unit is installed easily without being deformed.

### BRIEF DESCRIPTION OF DRAWINGS

Fig. 1 is a perspective view of the whole of a bearing device according to Embodiment 1.
Fig. 2 is a cross-sectional view along a plane including a rotation axis of a bearing according to Embodiment 1.
Fig. 3 is an enlarged cross-sectional view, particularly of a sensor unit and a magnetic ring in Fig. 2.
Fig. 4 is a diagram showing the bearing device according to Embodiment 1 as seen from the sensor unit side.
Fig. 5 is an exploded perspective view of the sensor unit according to Embodiment 1.
Fig. 6 is a perspective view of the sensor unit having been assembled, according to Embodiment 1.
Fig. 7 is a cross-sectional view along a plane including a rotation axis of a bearing according to Embodiment 2.
Fig. 8 is an enlarged cross-sectional view, particularly of a sensor unit and a magnetic ring in Fig. 7.
Fig. 9 is a cross-sectional view along a plane including a rotation axis of a bearing according to Embodiment 3.
Fig. 10 is an enlarged cross-sectional view, particularly of a sensor unit and a magnetic ring in Fig. 9.
Fig. 11 is an enlarged cross-sectional view, particularly of a sensor unit and a magnetic ring according to Embodiment 4.
Fig. 12 is an enlarged cross-sectional view, particularly of a sensor unit and a magnetic ring according to Embodiment 5.

### DESCRIPTION OF EMBODIMENTS

In the following, present embodiments are described in detail based on the drawings.

### (Embodiment 1)

### <Configuration of Bearing Member>

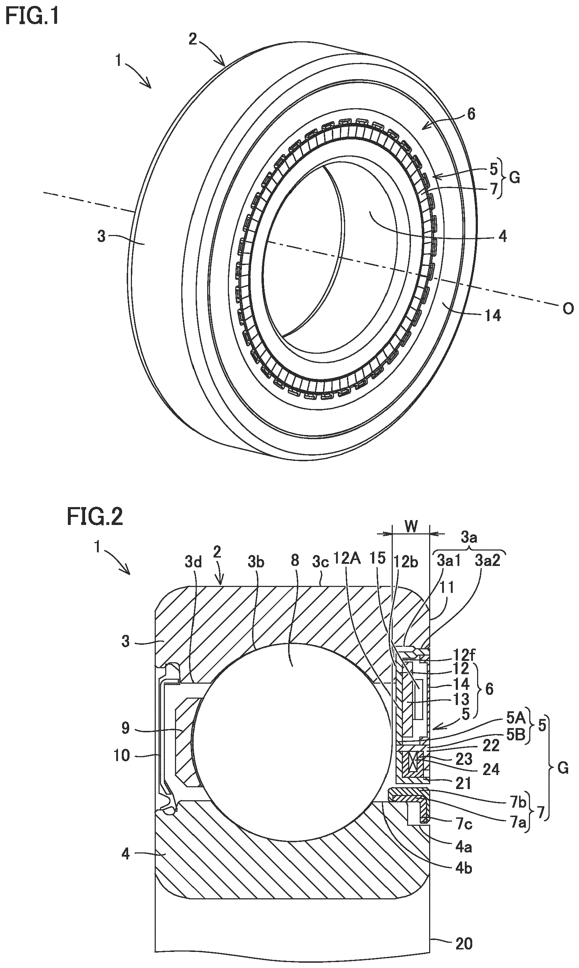

Fig. 1 is a perspective view of the whole of a bearing device according to Embodiment 1. Referring to Fig. 1, bearing device 1 of the present embodiment includes a bearing 2, a sensor unit 6, and a magnetic ring 7. Bearing 2 includes an outer ring 3 and an inner ring 4. In bearing 2, outer ring 3 serves as a stationary ring and inner ring 4 serves as a rotatable ring, for example. While bearing 2 described herein is a deep-groove ball bearing by way of example, the type of bearing 2 is not limited to the deep-groove ball bearing.

Bearing 2 is a standard bearing of which main dimensions (the inside diameter, the outside diameter, and the width, for example) are defined by specific standards. The standard bearing refers to a bearing of which dimensions are defined by the ISO standard or the JIS, for example. Bearing 2 is a radial bearing, and main dimensions of bearing 2 are dimensions defined by ISO 15 or JIS B 1512-1. In the following, bearing 2 is also referred to as standard bearing 2.

Sensor unit 6 includes a stator 5 and a lid 14. Details of the structure of stator 5 are described later herein. Lid 14 protects the inside of sensor unit 6. Magnetic ring 7 is a magnetic member in which N poles and S poles are alternately magnetized in the circumferential direction. Stator 5 is fixed to outer ring 3, and magnetic ring 7 is fixed to inner ring 4. Stator 5 and magnetic ring 7 constitute an electric generator G. While generator G is a claw-pole type generator, it may also be a generator having another structure. The one-dot chain line in Fig. 1 is a rotation axis O of bearing 2.

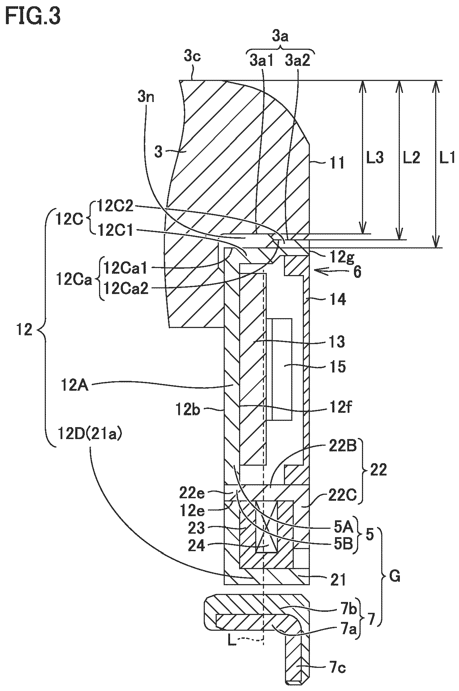

Fig. 2 is a cross-sectional view along a plane including the rotation axis of the bearing according to Embodiment 1. Fig. 3 is an enlarged cross-sectional view, particularly of the sensor unit and the magnetic ring in Fig. 2. Referring to Figs. 2 and 3, bearing 2 includes, in addition to outer ring 3 and inner ring 4, a rolling element 8, a cage 9, and a seal 10. Bearing 2 may be selected from standard bearings of respective model numbers having a size of a distance W between rolling element 8 and an end face 11 in the axial direction (the lateral direction in Fig. 2) that allows sensor unit 6 and magnetic ring 7 to be accommodated. End face 11 is also an end face of outer ring 3.

A plurality of rolling elements 8 are arranged at intervals in the circumferential direction (the depth direction in Fig. 2) of bearing 2. Cage 9 retains the plurality of rolling elements 8. One end-face side (right side in Fig. 2) of cage 9 in the lateral direction in Fig. 1, which is the axial direction, is open. Cage 9 has a shape in which the other end-face side (the left side in Fig. 2) in the axial direction is connected. Thus, in Fig. 2, cage 9 is substantially located only in the region on the left side with respect to the center of rolling element 8, and cage 9 is not located in the region on the right side with respect to the center of rolling element 8.

Sensor unit 6 as a component of bearing device 1 in the present embodiment includes a cage member 12 and a circuit board 13 in addition to stator 5 and lid 14. Cage member 12 is disposed at a position on one end-face side (the right side in Fig. 2) of cage 9, with respect to rolling element 8. Specifically, cage member 12 is disposed on the side, in the axial direction, where cage 9 is open and thus cage 9 is not located. Cage member 12 is disposed at a position where cage 9 should commonly be located.

Cage member 12 has a side plate portion 12A, an outer circumferential portion 12C, and an inner circumferential portion 12D. Outer circumferential portion 12C and inner circumferential portion 12D are collectively referred to herein as circumferential portion. Side plate portion 12A extends circumferentially, i.e., annularly. That is, side plate portion 12A extends continuously in the circumferential direction (to form one ring). The circumferential portion extends in the direction crossing side plate portion 12A.

Side plate portion 12A is a portion in cage member 12 that is located axially closest to rolling element 8 (inside in bearing 2), and disposed adjacent to rolling element 8. Side plate portion 12A has a back surface 12b facing rolling element 8 and a front surface 12f opposite to back surface 12b (i.e., a surface that does not face rolling element 8). In other words, back surface 12b faces the inside of bearing 2, and front surface 12f faces the outside of bearing 2. With side plate portion 12A, outer circumferential portion 12C, and inner circumferential portion 12D, cage member 12 has a region on front surface 12f of side plate portion 12A that is surrounded by side plate portion 12A, outer circumferential portion 12C, and inner circumferential portion 12D. The region surrounded by side plate portion 12A, outer circumferential portion 12C, and inner circumferential portion 12D is considered herein as the interior of sensor unit 6. Cage member 12 is a ring member having a cross-sectional shape in a C shape (or U shape) formed by side plate portion 12A, outer circumferential portion 12C, and inner circumferential portion 12D.

Circuit board 13 is fixed to front surface 12f of side plate portion 12A of cage member 12. One or more sensors that monitor and detect a state of bearing 2 are mounted on circuit board 13. As shown in Fig. 2, an acceleration sensor 15 is mounted on circuit board 13 as a sensor, for example. Acceleration sensor 15 detects vibration of bearing 2. Circuit board 13 is fixed, for example, to a region of front surface 12f that is located relatively outward in the radial direction (a region relatively closer to outer circumferential portion 12C). A part of the outer edge of circuit board 13 may be in contact with the inner wall of outer circumferential portion 12C.

Outer circumferential portion 12C of cage member 12 is fit in and fixed to a first cut-away portion 3a formed in the inner circumferential surface on one end-face side (the right side in Fig. 2) of outer ring 3. Cage member 12 may be fixed to outer ring 3 by means of both press-fit and bonding, or may be fixed by another method. The fixing is not herein limited to firm fixing where the fixed parts will not separate from each other, but includes a state where the fixed parts are easily detachable from each other which required, however, a pulling force of a certain magnitude or more, like press-fit parts, for example. Cage member 12 is fixed to first cut-away portion 3a, so that a certain gap is kept between rolling element 8 and cage member 12. As a result, rolling element 8 and cage member 12 can be prevented from coming into contact with each other by the gap, even when rolling element 8 and cage member 12 are displaced from each other in the axial direction.

As described above, circuit board 13 and cage member 12 to which circuit board 13 is fixed are both components of sensor unit 6. Therefore, a sensor such as acceleration sensor 15 mounted on circuit board 13 is retained by sensor unit 6. Since cage member 12 is fixed to outer ring 3, sensor unit 6 is fixed to outer ring 3.

In Figs. 2 and 3, cage member 12 has a first fit surface that fits in outer ring 3, and outer ring 3 has a second fit surface that fits on cage member 12, and the first and second fit surfaces each have a step. Due to the step, a part of the first fit surface and a part of the second fit surface are in contact with each other while another part of the first fit surface and another part of the second fit surface are spaced from each other without being in contact with each other. It is more preferable that the area where the first fit surface and the second fit surface are not in contact with each other is larger (the dimension of the area in a cross-sectional view is larger) than the area where they are in contact with each other. For example, the area where the first fit surface and the second fit surface are in contact with each other is preferably 45% or less, and more preferably 40% or less of the area of the first fit surface. However, in view of the fact that cage member 12 is fixed to the stationary ring, the area where they are in contact with each other is preferably 20% or more, and more preferably 25% or more of the area of the first fit surface. The first fit surface is a portion of the circumferential portion of cage member 12 that fits in outer ring 3 serving as a stationary ring, and is an outer circumferential fit surface 12Ca in Figs. 2 and 3. The second fit surface is a portion of outer ring 3 that fits on outer circumferential portion 12C of cage member 12, and is first cut-away portion 3a in Figs. 2 and 3.

Specifically, outer circumferential fit surface 12Ca has a step formed in such a manner that the distance from an outermost surface 3c, which is the radially outermost portion of outer ring 3, to its side adjacent to opening 12g (the right side in Figs. 2 and 3) opposite to the rolling element 8 side (the left side in Figs. 2 and 3) in the axial direction, is smaller than the distance to its side adjacent to rolling element 8. Outer circumferential fit surface 12Ca has a fit surface 12Ca1 and a fit surface 12Ca2. Fit surface 12Ca1 is formed on the rolling element 8 side, and fit surface 12Ca2 is formed on the opening 12g side. While both of these surfaces extend in the axial direction, a boundary portion between these surfaces has a step in the radial direction. When cage member 12 is formed by press working as described later herein, the press working is facilitated by forming fit surface 12Ca2 as a straight surface. It is preferable that fit surface 12Ca2 has a longer axial dimension than a cut-away portion 3a2 described later herein.

The step, i.e., the boundary portion between fit surface 12Ca1 and fit surface 12Ca2 is as follows. As shown in Fig. 3, the boundary portion may be inclined in such a manner that the angle formed by the boundary portion and each of fit surfaces 12Ca1 and 12Ca2 is an obtuse angle (for example, 120° or more and 150° or less). However, the obtuse angle may be 100° or more and less than 120°. This boundary portion may be considered as being included in none of fit surfaces 12Ca1 and 12Ca2.

While outer circumferential fit surface 12Ca has a step as described above, the thickness, in the radial direction, of outer circumferential portion 12C is substantially constant throughout the whole of the outer circumferential portion, and there is no large difference in thickness between the different regions. Therefore, not only outer circumferential fit surface 12Ca but also outer circumferential portion 12C including both outer circumferential fit surface 12Ca and the other portion has a step. Specifically, outer circumferential portion 12C includes a first outer circumferential portion 12C1 including fit surface 12Ca1 and a second outer circumferential portion 12C2 including fit surface 12Ca2. Outer circumferential portion 12C has the step formed in such a manner that the distance in the radial direction from outermost surface 3c to second outer circumferential portion 12C2 in the radial direction is entirely smaller than the distance from outermost surface 3c to first outer circumferential portion 12C1.

First cut-away portion 3a also has a step formed in such a manner that the distance from outermost surface 3c to its side adjacent to opening 12g (the right side in Figs. 2 and 3 and the end-face 11 side) opposite to rolling element 8 (the left side in Figs. 2 and 3) in the axial direction, is larger than the distance to its side adjacent to rolling element 8. First cut-away portion 3a has a cut-away portion 3a1 and a cut-away portion 3a2. Cut-away portion 3a1 is formed on the rolling element 8 side, and cut-away portion 3a2 is formed on the opening 12g side. While both portions extend in the axial direction, a boundary portion between these portions has a step in the radial direction.

As shown in Fig. 3, regarding the step, i.e., the boundary portion between cut-away portion 3a1 and cut-away portion 3a2, the angle formed by the boundary portion and each of cut-away portions 3a1 and 3a2 may be an obtuse angle (for example, 120° or more and 150° or less). However, the obtuse angle may be 100° or more and less than 120°.

In the radial direction, fit surface 12Ca1 and cut-away portion 3a1 are spaced from each other, while fit surface 12Ca2 and cut-away portion 3a2 are in contact with each other. Accordingly, L1 > L2 > L3 is satisfied, where L1 is the radial distance from outermost surface 3c to fit surface 12Ca1, L2 is the radial distance therefrom to fit surface 12Ca2 and cut-away portion 3a2 which are in contact with each other, and L3 is the radial distance therefrom to cut-away portion 3a1.

L2 may be greater than L3 by 3% or more and 5% or less, and L1 may be greater than L2 by 3% or more and 5% or less. Because of such a shape, the radial distance L3-L1 between fit surface 12Ca1 and cut-away portion 3a1 is larger than the radial distance L2-L1 when first cut-away portion 3a has no step, for example. The distance L3-L1 is larger because a clearance 3n is formed in such a manner that cut-away portion 3a1 of first cut-away portion 3a recedes radially outward. Clearance 3n is a portion of first cut-away portion 3a located on the rolling element 8 side and the radially outermost side (the upper left portion in Figs. 2 and 3) and, in this portion, the material forming outer ring 3 has been removed more than other regions. Clearance 3n may be formed as shown in Figs. 2 and 3. However, clearance 3n may not be formed.

A first distance between end face 11 and the surface forming first cut-away portion 3a (the surface in contact with back surface 12b), except for clearance 3n, is, for example, 10% or more and 20% or less of the axial dimension of outer ring 3. A second distance between first cut-away portion 3a and a radially inner surface 3d of outer ring 3 closest to inner ring 4 (radially inside), except for clearance 3n is, for example, 20% or more and 30% or less of the radial dimension of outer ring 3. The first distance and the second distance may be equal to each other, or the first distance may be larger than the other, or the second distance may be larger than the other.

Stator 5 includes a stator 5A and a stator 5B. From a different viewpoint, stator 5 includes two magnetic members 21 and 22, a bobbin 23, and a coil 24. A part of cage member 12 is used as magnetic member 21 of stator 5A included in stator 5. Stator 5B included in stator 5 is used as magnetic member 22. That is, stator 5A corresponds to cage member 12 and corresponds to magnetic member 21. Stator 5B corresponds to magnetic member 22. In other words, stator 5A, cage member 12, and magnetic member 21 constitute the same part, and stator 5B and magnetic member 22 constitute the same part.

Coil 24 wound around bobbin 23 is disposed inside stator 5A, that is, in a relatively radially inner region in the region surrounded by side plate portion 12A, outer circumferential portion 12C, and inner circumferential portion 12D. A part of the surface of at least one of bobbin 23 or coil 24 may be in contact with inner circumferential portion 12D, or may be in contact with side plate portion 12A. Bobbin 23 and coil 24 are covered with magnetic member 22 which is stator 5B, from the end face 11 side (the side opposite to rolling element 8) in the axial direction. In the cross section shown in Figs. 2 and 3, magnetic member 22 has an outer circumferential portion 22B and an end face portion 22C. Besides them, actually magnetic member 22 further includes an inner circumferential portion 22D described later herein, which, however, is not shown in Figs. 2 and 3 because it is not visible. Outer circumferential portion 22B and end face portion 22C are substantially orthogonal to each other. Magnetic member 22 has the portion that is not visible in Figs. 2 and 3, and therefore has a C shape (U shape). Outer circumferential portion 22B divides the inside of stator 5A into a radially outer region (a region where circuit board 13 is disposed) and a radially inner region (a region where coil 24 is disposed). End face portion 22C and lid 14 that are arranged side by side cover the inside of stator 5A. End face portion 22C covers a radially inner region of the inside of stator 5A. The inside of stator 5A is covered from the end face 11 side by them arranged side by side. Bobbin 23 and coil 24 are surrounded by a part (a radially inner region) of side plate portion 12A of stator 5A, inner circumferential portion 12D, outer circumferential portion 22B of stator 5B, and end face portion 22C.

The foregoing described in other words is as follows. Magnetic member 21 occupies the whole of cage member 12, while magnetic member 22 is disposed in a radially inner region of cage member 12. A radially inner region of the U-shaped cross section of magnetic member 21 faces the U-shaped cross section of magnetic member 22. Coil 24 including bobbin 23 is mounted between magnetic members 21 and 22 facing each other so as to be surrounded by magnetic members 21 and 22.

As shown in Fig. 3, lid 14 which is located in a region radially outside stator 5B, other than stator 5B and a part of stator 5A of stator 5 that surrounds coil 24, in particular, covers the region inside stator 5A.

A stepped second cut-away portion 4a is formed in the outer circumferential surface of inner ring 4, on the one end face-side (the right side in Fig. 2), opposite to first cut-away portion 3a. In the axial direction of bearing 2, an annular recess extending toward rolling element 8 is formed by first cut-away portion 3a and second cut-away portion 4a, from outer ring 3 to inner ring 4.

Second cut-away portion 4a extends in the axial direction from end face 11 by a dimension of 5% or more and 10% or less of the axial dimension of inner ring 4, for example. Second cut-away portion 4a extends in the radial direction from the surface of inner ring 4 closest to outer ring 3 (the radially outer surface) by a dimension of 10% or more and 20% or less of the radial dimension of inner ring 4, for example. The radial dimension and the axial dimension of second cut-away portion 4a may be equal to each other, the radial dimension may be larger than the other, or the axial dimension may be larger than the other.

Magnetic ring 7 includes a core metal 7a and a multipolar magnet 7b. Multipolar magnet 7b is obtained by, for example, vulcanization bonding of a magnetic material containing kneaded magnetic powder and rubber to core metal 7a and alternate magnetization of N poles and S poles in the circumferential direction of magnetic ring 7. Core metal 7a of magnetic ring 7 has a flange portion 7c for increased rigidity. Magnetic ring 7 is fixed to a radially outer surface 4b of inner ring 4 by, for example, press-fit, bonding, or the like. Flange portion 7c is received in second cut-away portion 4a formed in inner ring 4.

Cage member 12 is press-fit or bonded so as not to extend axially outward beyond end face 11 of outer ring 3. Since cage member 12 is disposed so as not to extend axially outward beyond end face 11 of outer ring 3, circuit board 13 fixed to cage member 12 is also disposed so as not to extend axially outward beyond end face 11 of outer ring 3. Accordingly, sensor unit 6 is fixed to outer ring 3 so as not to extend axially outward beyond the end face of outer ring 3. Moreover, magnetic ring 7 is disposed so as not to extend beyond an end face 20 of inner ring 4. Further, magnetic ring 7 and sensor unit 6 do not extend beyond the open side of cage 9 in the axial direction. Thus, both of sensor unit 6 (cage member 12 and circuit board 13) and magnetic ring 7 are fixed (arranged) so as not to extend axially outward beyond end face 11 of outer ring 3 and end face 20 of inner ring 4. In this way, sensor unit 6 that is thin in the axial direction can be manufactured, so that bearing device 1 having the same size as the standard bearing can be provided.

As shown in Fig. 3, in the annular recess formed by first cut-away portion 3a and second cut-away portion 4a, magnetic ring 7, coil 24, and circuit board 13 are spaced from each other on an imaginary straight line L extending in the radial direction of bearing 2. In other words, they are arranged so as not to be spaced from each other on an imaginary straight line extending in the axial direction of bearing 2. In Fig. 3, magnetic ring 7, coil 24, and circuit board 13 are arranged in this order from the inner side to the outer side in the radial direction of bearing 2. Thus, each component can be disposed inside the annular recess, and therefore, the thickness of bearing 2 in the axial direction can be reduced. Further, in bearing device 1, magnetic ring 7 is fixed to inner ring 4, and stator 5 (particularly the region where stator 5A and stator 5B surround bobbin 23 and coil 24) is fixed, at the opposite position, to outer ring 3, for example. Since variation of the gap in the radial direction between stator 5 and magnetic ring 7 is small, a stable amount of power can be generated by generator G.

Next, materials for respective members are described. Cage member 12 (stator 5A and magnetic member 21) and magnetic member 22 (stator 5B) are each a magnetic material made of metal. Lid 14 is a non-metallic resin member. Instead of lid 14, a resin sealing material may be used to seal circuit board 13.

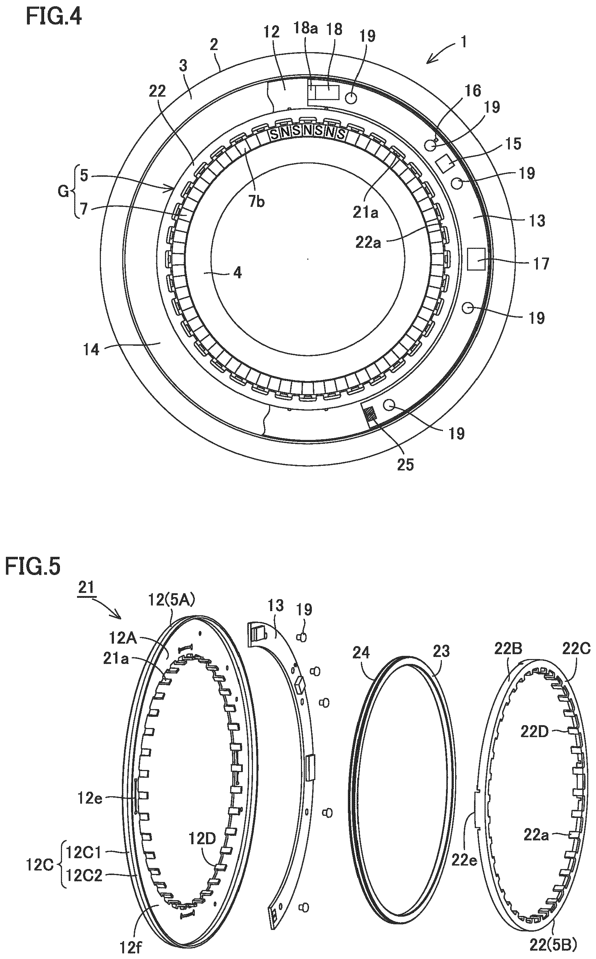

Fig. 4 is a diagram showing the bearing device according to Embodiment 1 as seen from the sensor unit side. In Fig. 4, a part of lid 14 is not shown so that the inside of sensor unit 6 can be seen. Referring to Fig. 4, a temperature sensor 16 is mounted as a sensor on circuit board 13, in addition to acceleration sensor 15. Acceleration sensor 15 is capable of detecting the radial acceleration of bearing 2, for example. Further, temperature sensor 16 is capable of accurately measuring the temperature of bearing 2.

A power supply circuit 17 and a wireless communication circuit 18 are further mounted on circuit board 13. Power supply circuit 17 rectifies AC power generated by generator G through rotation of inner ring 4 and converts the AC power into DC power. That is, power supply circuit 17 is completely different from the power supply, i.e., generator G (electromagnetic induction generator) in the present embodiment. Acceleration sensor 15, temperature sensor 16, and wireless communication circuit 18 use the DC power generated through the conversion by power supply circuit 17. A terminal 25 is disposed on circuit board 13. The opposite ends (not shown) of wound coil 24, contained in stator 5 and drawn out therefrom, are connected to terminal 25.

Circuit board 13 is fixed to a part of side plate portion 12A in the annular shape, and is therefore substantially arc-shaped. Acceleration sensor 15 and temperature sensor 16 are mounted on circuit board 13, in the circumferential direction of the arc shape of circuit board 13. Screws 19 each spaced from acceleration sensor 15 may be disposed on both sides of acceleration sensor 15. As shown in Fig. 4, wireless communication circuit 18, acceleration sensor 15, power supply circuit 17, and terminal 25 may be arranged at intervals in this order from one end to the other end in the circumferential direction of circuit board 13.

Wireless communication circuit 18 includes an antenna portion 18a. Wireless communication circuit 18 uses antenna unit 18a to wirelessly transmit, to the outside, respective outputs of acceleration sensor 15 and temperature sensor 16, which monitor the state of bearing 2. Circuit board 13 is fixed to cage member 12 with a plurality of screws 19. Circuit board 13 may be bonded to be fixed to cage member 12. Circuit board 13 on which wireless communication circuit 18 is mounted is disposed to face lid 14 made of resin. Thus, wireless communication circuit 18 has a structure that is not sealed with an electrically conductive material such as metal. Therefore, wireless communication by means of antenna portion 18a in wireless communication circuit 18 is possible. Thus, the bearing of bearing device 1 is a bearing equipped with wireless sensors.

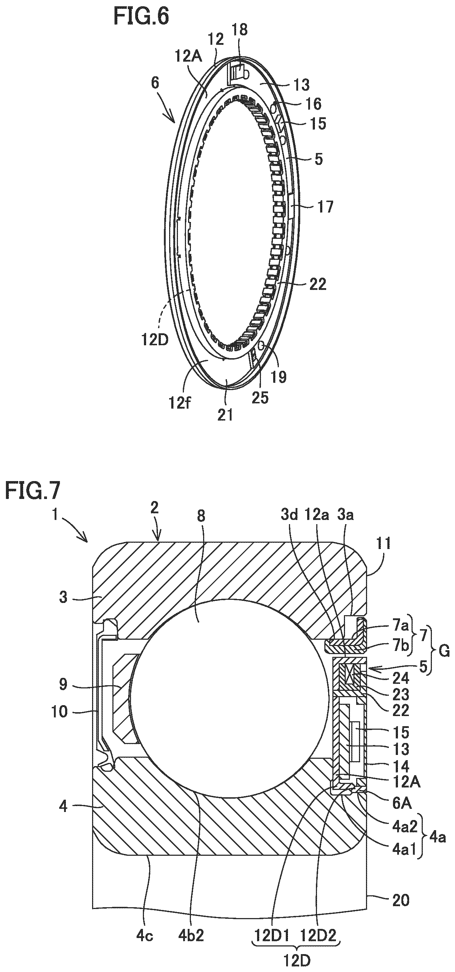

Fig. 5 is an exploded perspective view of the sensor unit according to Embodiment 1. Fig. 6 is a perspective view of the sensor unit having been assembled, according to Embodiment 1. In Figs. 5 and 6, lid 14 is not shown. Referring to Figs. 5 and 6, a plurality of claw portions 21a are formed in inner circumferential portion 12D of magnetic member 21 (the left member in Fig. 5) having a U-shaped crosssection. A plurality of claw portions 22a are formed in inner circumferential portion 22D of magnetic member 22. Coil 24 formed by winding a magnet wire a plurality of times is disposed in a circumferential groove of bobbin 23. Bobbin 23 may not be used.

### <Method for Assembling Stator 5>

A method for assembling stator 5 is described below. Referring to Figs. 5 and 6 again, first, in the state where bobbin 23 around which coil 24 is wound is inserted into magnetic member 22, a plurality of claw portions 21a of magnetic member 21 and a plurality of claw portions 22a of magnetic member 22 are assembled so as to be alternately arranged with a gap in between in the circumferential direction. Next, outer circumferential portion 22B of magnetic member 22 is fixed in such a manner that its end face (except for protrusions 22e described later herein) abuts against front surface 12f of side plate portion 12A of magnetic member 21. At this time, respective openings of magnetic member 21 and magnetic member 22 face each other, and bobbin 23 and coil 24 are housed in the openings.

As shown in Fig. 5, a hole 12e extending through side plate portion 12A of stator 5A (cage member 12, magnetic member 21) is formed in the side plate portion. Hole 12e is formed in a radially inner region of side plate portion 12A. Protrusion 22e is formed on the end of outer circumferential portion 22B of stator 5B (magnetic member 22), on the side plate portion 12A side of cage member 12 in the axial direction. Protrusion 22e is a portion where the end of cage member 12 on the side plate portion 12A side protrudes toward side plate portion 12A, from the other portion. A plurality of holes 12e and a plurality of protrusions 22e are formed at intervals in the circumferential direction. For example, while four holes 12e and four protrusions 22e are formed as shown in Fig. 5, it is preferable that three or more holes and three or more protrusions are formed. Each of holes 12e and protrusions 22e has an arc shape along the circumference of the annular shape of cage member 12. Protrusion 22e is inserted into hole 12e to make them fit each other. Accordingly, as shown in Fig. 6, a plurality of claw portions 21a and a plurality of claw portions 22a are assembled so as to be alternately arranged with a gap in between in the circumferential direction. Magnetic member 22 is attached to inner circumferential portion 12D of cage member 12. Stator 5B is coupled to stator 5A in such a manner that end face portion 22C is directed toward the outermost portion in the axial direction (the rightmost portion in Fig. 5). At this time, magnetic member 21 and magnetic member 22 are coupled together in such a manner that the end (except for protrusions 22e) of outer circumferential portion 22B abuts against side plate portion 12A. Hole 12e and protrusion 22e are fixed so as to restrain each other by means of press-fit, bonding, welding (for example, laser welding), or the like. More than one fixing means may be selected from the above-described ones and used in combination.

By making hole 12e and protrusion 22e fit each other, it is possible to make magnetic member 21 and magnetic member 22 coaxial without using a jig, which facilitates assembly of these members. Moreover, it is possible to make claw portions 21a and claw portions 22a in phase so as to be alternately arranged in the circumferential direction. However, hole 12e and protrusion 22e may not be used. If they are not used, magnetic member 21 and magnetic member 22 may be made coaxial and claw portions 21a and claw portions 22a may be made in phase, by using a jig which is not shown in Figs. 5 and 6. In this case, side plate portion 12A and outer circumferential portion 22B are caused to abut against each other and fixed by welding (for example, laser welding).

Thereafter, circuit board 13 is fixed to front surface 12f of side plate portion 12A with screws 19, and circuit board 13 is protected by lid 14 or a resin sealing material. An electrically insulating sheet (for example, a polyimide film) which is not shown may be inserted between circuit board 13 and side plate portion 12A, to ensure electrical insulation between circuit board 13 and cage member 12.

A plurality of claw portions 21a and a plurality of claw portions 22a are arranged to face each other with a gap left between them and multipolar magnet 7b of magnetic ring 7 shown in Fig. 3. A plurality of claw portions 21a of magnetic member 21 and a plurality of claw portions 22a of magnetic member 22 in stator 5, and magnetic ring 7 constitute a claw-pole-type generator G of radial type. The total number of the plurality of claw portions 21a and 22a is equal to the number of poles of multipolar magnet 7b (the total number of N poles and S poles). Stator 5 and magnetic ring 7 face each other in the radial direction of bearing 2.

For example, a magnetic flux from the N pole of multipolar magnet 7b enters magnetic member 21 (or magnetic member 22) from claw portions 21a (or claw portions 22a), which are magnetic poles, goes around coil 24, and returns to the S pole of multipolar magnet 7b via adjacent claw portions 22a (or claw portions 21a). The direction of the magnetic flux is reversed as respective positions of the N pole and the S pole of multipolar magnet 7b are replaced with each other by rotation of inner ring 4. An alternating magnetic field generated as described above generates AC power at the opposite ends of coil 24.

### <Functions and Effects>

Bearing device 1 according to the present disclosure includes: bearing 2 including outer ring 3, inner ring 4, and rolling element 8; and sensor unit 6 that is fixed to a stationary ring being one of outer ring 3 or inner ring 4, and retains a sensor that monitors a state of bearing 2. Sensor unit 6 includes cage member 12 including side plate portion 12A and the circumferential portion (outer circumferential portion 12C and inner circumferential portion 12D) extending in a direction crossing side plate portion 12A. The circumferential portion of cage member 12 fits in the stationary ring. The circumferential portion includes a first fit surface (outer circumferential fit surface 12Ca) that fits in the stationary ring, and the stationary ring includes a second fit surface (first cut-away portion 3a) that fits on the circumferential portion, and a part of the first fit surface and a part of the second fit surface are in contact with each other and another part of the first fit surface and another part of the second fit surface are spaced from each other.

The first fit surface and the second fit surface are in contact with each other only in a part of the axial region, for example, and therefore, the axial length (press-fit width) where the first fit surface and the second fit surface fit each other is shorter than that in the case where the first fit surface and the second fit surface are in contact with each other in the whole axial region. Accordingly, a region where the stationary ring is pressed when cage member 12 is press-fit is reduced, so that an excessive press load during the press-fit can be prevented. Thus, deformation of cage member 12 can be prevented.

In this way, a bearing device can be provided in which an excessive press load that may be applied when sensor unit 6 including stator 5 is press-fit can be prevented, and thus sensor unit 6 is easily installed without being deformed.

In bearing device 1, outer circumferential fit surface 12Ca has a step formed in such a manner that the distance from the surface (outermost surface 3c) of the stationary ring, which is radially opposite to the surface (an outer ring raceway surface 3b) contacting rolling element 8, to its side adjacent to opening 12g opposite to side plate portion 12A, is smaller than the distance to its side adjacent to side plate portion 12A in the axial direction.

In bearing device 1, first cut-away portion 3a has a step formed in such a manner that the distance from the surface (outermost surface 3c) of the stationary ring radially opposite to its surface contacting rolling element 8, to its side (end face 11 side) opposite to rolling element 8, is larger than the distance to its side adjacent to rolling element 8 in the axial direction.

Accordingly, as described above, an excessively large press load during the press-fit can be prevented, and sensor unit 6 can thus be installed easily without being deformed.

For example, when sensor unit 6 in Fig. 3 is press-fit into first cut-away portion 3a of outer ring 3, initially first outer circumferential portion 12C1 of cage member 12 can be inserted while keeping a gap between it and cut-away portion 3a2 (without being brought into contact with cut-away portion 3a2). Distance L1 from outermost surface 3c to first outer circumferential portion 12C1 is larger than the distance therefrom to second outer circumferential portion 12C2. Distance L2 between cut-away portion 3a2 and outermost surface 3c satisfies L1 > L2. Therefore, first outer circumferential portion 12C1 can be inserted without being brought into contact with cut-away portion 3a2. Therefore, cage member 12 is inserted without interference by cut-away portion 3a2. Thus, sensor unit 6 including cage member 12 can be press-fit straight along cut-away portion 3a2 without being inclined with respect to cut-away portion 3a2. Accordingly, the posture of sensor unit 6 can be made stable.

Moreover, since second outer circumferential portion 12C2 of cage member 12 has opening 12g at its end, its rigidity is lower than that of first outer circumferential portion 12C1. Therefore, even when the distance from outermost surface 3c to cut-away portion 3a2 is larger than the distance therefrom to cut-away portion 3a1 and cut-away portion 3a2 comes into contact with second outer circumferential portion 12C2 during the press-fit, second outer circumferential portion 12C2 is deformed more easily by the press-fit than first outer circumferential portion 12C1. With this configuration, an excessive press load during the press-fit can be prevented.

Further, second outer circumferential portion 12C2 of cage member 12 that is deformed easily is located at a position further away from outer ring raceway surface 3b in the axial direction, than first outer circumferential portion 12C1. Therefore, deformation of outer ring raceway surface 3b resultant from deformation of second outer circumferential portion 12C2 during the press-fit of cage member 12 can be prevented. Accordingly, any influences due to deformation of outer ring raceway surface 3b, such as change in characteristics of bearing 2, can be prevented.

Bearing device 1 may further include magnetic ring 7, stator 5, wireless communication circuit 18, power supply circuit 17, and circuit board 13. Magnetic ring 7 is fixed to a rotatable ring which is one of outer ring 3 or inner ring 4, and has N and S poles magnetized alternately. Stator 5 includes, as a component, cage member 12 fixed to the stationary ring in such a manner that the cage member faces magnetic ring 7 in the radial direction of bearing 2, and the stator houses coil 24. Wireless communication circuit 18 wirelessly transmits an output of the sensor to the outside. Power supply circuit 17 is capable of adjusting an output of generator G constituted of magnetic ring 7 and stator 5. On circuit board 13, the sensor, wireless communication circuit 18 and power supply circuit 17 are mounted. Bearing device 1 having the above features can generate electric power using generator G as a power source, and can adjust the electric power generated by generator G by means of power supply circuit 17. With wireless communication circuit 18 and the sensor mounted on circuit board 13, the output of the sensor can be transmitted wirelessly to the outside.

The fact that the output of generator G is adjustable by power supply circuit 17 means that AC power generated by generator G is rectified and converted into DC power as described above, for example. Alternatively, the above-mentioned "adjustable" may mean that the voltage value is controlled to reach a target value by voltage step-up and/or step-down.

### (Supplementary Notes to Embodiment 1)

In addition, in bearing device 1, a part (stator 5A) of stator 5 may be cage member 12, and circuit board 13 may be fixed to cage member 12. Cage member 12 may additionally function as stator 5A (magnetic member 21), so that the number of components can be reduced and press molding of each component can be easily performed.

### (Embodiment 2)

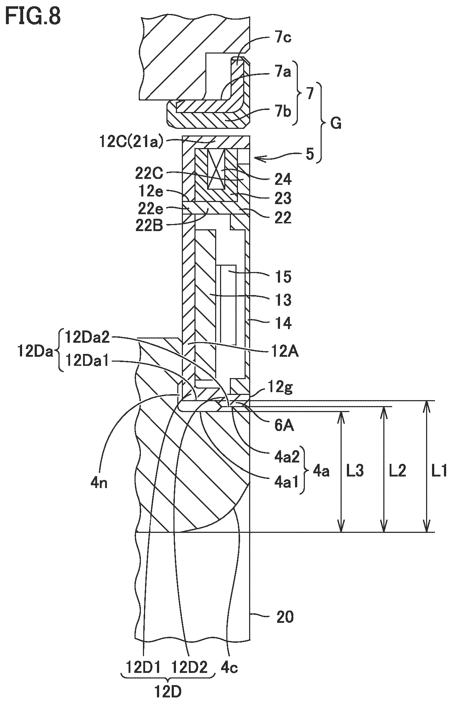

In the description of a bearing device according to each of the following embodiments, the same component as that of the bearing device according to the foregoing embodiment is denoted by the same reference character, and the description thereof is not herein repeated unless there is a particular difference in configuration and function. Fig. 7 is a cross-sectional view along a plane including a rotation axis of a bearing according to Embodiment 2. Fig. 8 is an enlarged cross-sectional view, particularly of a sensor unit and a magnetic ring in Fig. 7. That is, Figs. 7 and 8 correspond to Figs. 2 and 3 of Embodiment 1, respectively. Referring to Figs. 7 and 8, the present embodiment is basically the same as Embodiment 1, except that inner ring 4 is a stationary ring and outer ring 3 is a rotatable ring. Therefore, sensor unit 6 including stator 5 is fixed to inner ring 4. Therefore, a second cut-away portion 4a similar to first cut-away portion 3a of Embodiment 1 is formed in inner ring 4. Second cut-away portion 4a serving as a second fit surface has a cut-away portion 4a1 on the rolling element 8 side and a cut-away portion 4a2 on the opening 12g side. A clearance 4n is formed in cut-away portion 4a1 of inner ring 4 so as to recede radially outward.

Magnetic ring 7 is fixed to outer ring 3. Therefore, in outer ring 3, first cut-away portion 3a and radially inner surface 3d are formed similarly to second cut-away portion 4a and radially outer surface 4b of Embodiment 1. Further, in cage member 12, inner circumferential portion 12D is formed similarly to outer circumferential portion 12C of Embodiment 1. Inner circumferential portion 12D of cage member 12 is fit in and fixed to second cut-away portion 4a formed in the outer circumferential surface on one end-face side (right side in Fig. 2) of inner ring 4.

Inner circumferential portion 12D of the present embodiment has an inner circumferential fit surface 12Da as a first fit surface. Inner circumferential fit surface 12Da has a fit surface 12Da1 and a fit surface 12Da2. Fit surface 12Da1 is formed on the rolling element 8 side, and fit surface 12Da2 is formed on the opening 12g side. Inner circumferential portion 12D includes a first inner circumferential portion 12D1 including fit surface 12Da1, and a second inner circumferential portion 12D2 including fit surface 12Da2.

In bearing device 1, inner circumferential fit surface 12Da has a step formed in such a manner that the distance from the surface (an innermost surface 4c) of the stationary ring opposite to the surface (an inner ring raceway surface 4b2) thereof in contact with rolling element 8 in the radial direction, to its side adjacent to opening 12g, which is opposite to side plate portion 12A, is smaller than the distance therefrom to its side adjacent to side plate portion 12A in the axial direction.

In bearing device 1, second cut-away portion 4a has a step formed in such a manner that the distance from the surface (innermost surface 4c) of the stationary ring opposite to the surface (inner ring raceway surface 4b2) thereof in contact with rolling element 8 in the radial direction, to its side (the end face 20 side) opposite to rolling element 8, is larger than the distance therefrom to its side adjacent to rolling element 8 in the axial direction. Thus, the radial distance L1 from innermost surface 4c to fit surface 12Da1, the radial distance L2 therefrom to fit surface 12Da2 and cut-away portion 4a2 which are in contact with each other, and the radial distance L3 therefrom to cut-away portion 4a1 satisfy L1 > L2 > L3. Thus, the stationary ring may either be outer ring 3 or inner ring 4. As long as the present embodiment has a feature that a part of the first fit surface and a part of the second fit surface are in contact with each other and another part of the first fit surface and another part of the second fit surface are not in contact with each other, the present embodiment also has the same function/effect of making the posture of sensor unit 6 stable, like Embodiment 1.

### (Embodiment 3)

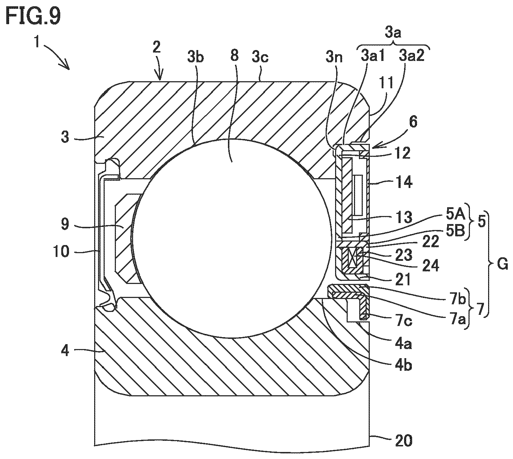

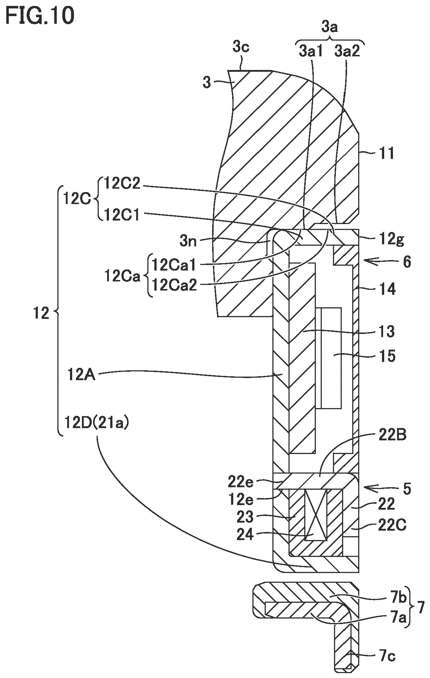

Fig. 9 is a cross-sectional view along a plane including a rotation axis of a bearing according to Embodiment 3. Fig. 10 is an enlarged cross-sectional view, particularly of a sensor unit and a magnetic ring in Fig. 9. That is, Figs. 9 and 10 correspond to Figs. 2 and 3 of Embodiment 1, respectively. Referring to Figs. 9 and 10, the present embodiment is basically the same as Embodiment 1. However, in bearing device 1 of the present embodiment, first cut-away portion 3a has a step formed in such a manner that the distance from outermost surface 3c to its side adjacent to end face 11 (the right side in Figs. 2 and 3), which is opposite to rolling element 8 (the left side in Figs. 2 and 3), is smaller than the distance therefrom to its side adjacent to rolling element 8 in the axial direction. Moreover, outer circumferential fit surface 12Ca has no step between fit surface 12Ca1 and fit surface 12Ca2, and is therefore entirely flat in the axial direction. In this respect, the present embodiment is different from Embodiment 1.

Similarly to Embodiment 1, the present embodiment may also have clearance 3n in outer ring 3, however, clearance 3n may not be formed therein. In addition, as shown in Fig. 10, as long as a gap between fit surface 12Ca2 and cut-away portion 3a2 can be kept in the state where cage member 12 is fit in first cut-away portion 3a, outer circumferential portion 12C in the present embodiment may also have a step formed in such a manner that the distance from outermost surface 3c to its side adjacent to opening 12g is smaller than the distance therefrom to its side adjacent to side plate portion 12A.

### <Functions and Effects>

In bearing device 1 of the present embodiment, first cut-away portion 3a has a step formed in such a manner that the distance from the surface (outermost surface 3c) of the stationary ring, which is opposite to the surface thereof in contact with rolling element 8 in the radial direction, to its side (end face 11 side) opposite to rolling element 8, is smaller than the distance therefrom to its side adjacent to rolling element 8 in the axial direction.

In the configuration of the present embodiment as well, the first fit surface and the second fit surface are in contact with each other only in a part of the axial region, for example, and therefore, the axial length (press-fit width) where the first fit surface and the second fit surface fit each other is shorter than that in the case where the first fit surface and the second fit surface are in contact with each other in the whole of the axial region. Accordingly, a region where the stationary ring is pressed when cage member 12 is press-fit is reduced, so that an excessive press load during the press-fit can be prevented. Thus, deformation of cage member 12 can be prevented.

For example, when sensor unit 6 in Fig. 10 is press-fit into first cut-away portion 3a of outer ring 3, initially first outer circumferential portion 12C1 of cage member 12 can be inserted while keeping a gap between it and cut-away portion 3a2 (without being brought into contact with cut-away portion 3a2). This is because the radial distance from outermost surface 3c to cut-away portion 3a2 is smaller than the radial distance therefrom to cut-away portion 3a1. Therefore, cage member 12 is inserted without interference by cut-away portion 3a2. Thus, sensor unit 6 including cage member 12 can be press-fit straight along cut-away portion 3a2 without being inclined with respect to cut-away portion 3a2. Accordingly, the posture of sensor unit 6 can be made stable.

As long as the present embodiment has a feature that a part of the first fit surface and a part of the second fit surface are in contact with each other and another part of the first fit surface and another part of the second fit surface are not in contact with each other, the present embodiment also has the same function/effect of making the posture of sensor unit 6 stable, like Embodiment 1.

### (Embodiment 4)

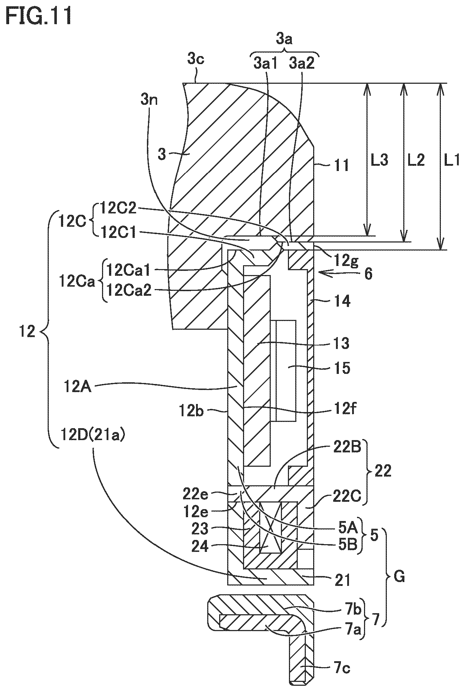

Fig. 11 is an enlarged cross-sectional view, particularly of a sensor unit and a magnetic ring according to Embodiment 4. Referring to Fig. 11, the present embodiment basically has the same configuration as that of Embodiment 1 in Fig. 3. However, in the present embodiment, outer circumferential portion 12C of cage member 12 has second outer circumferential portion 12C2 formed thinner in the radial direction than first outer circumferential portion 12C1. In this respect, Fig. 11 differs from Fig. 3 in which the radial thickness of the whole outer circumferential portion 12C is substantially constant. However, Fig. 11 is similar to Fig. 3 in that outer circumferential fit surface 12Ca has a step between fit surface 12Ca1 and fit surface 12Ca2, and first cut-away portion 3a has a step between cut-away portion 3a1 and cut-away portion 3a2.

In the case where cage member 12 is formed by cutting or press working, the rigidity of second outer circumferential portion 12C2 may be reduced by forming second outer circumferential portion 12C2 thinner than first outer circumferential portion 12C1, so that a press-fit load applied to outer ring 3 during press-fit of second outer circumferential portion 12C2 may be reduced.

In the case for example where cage member 12 is formed by press working, the range of the dimensional tolerance of second outer circumferential portion 12C2, which depends on the accuracy of the press working, is approximately from 0.15 mm to 0.2 mm for example, i.e., the range of the dimensional tolerance is relatively large. Therefore, the interference when second outer circumferential portion 12C2 is fit into first cut-away portion 3a is large. In such a case, it may be difficult to press-fit cage member 12 into first cut-away portion 3a. In view of this, as described above, ironing may be performed when cage member 12 undergoes press working, so that the thickness of outer circumferential portion 12C, particularly, second outer circumferential portion 12C2 is reduced.

In the present embodiment, the configuration in Fig. 11 may be replaced with a configuration where the radial thickness of the whole outer circumferential portion 12C including first outer circumferential portion 12C1 is thinner than the radial thickness of side plate portion 12A, which, however, is not shown. Moreover, the step between cut-away portion 3a1 and cut-away portion 3a2 of first cut-away portion 3a may not be formed so that the entire first cut-away portion 3a in Fig. 11 is flat, which is also not shown. In another example, the step between fit surface 12Ca1 and fit surface 12Ca2 of cage member 12 may not be formed, so that the entire outer circumferential fit surface 12Ca in Fig. 11 may be flat.

In the case where cage member 12 is formed by press working, it is preferable that fit surface 12Ca1 of outer circumferential fit surface 12Ca in Fig. 10 that is to be press-fit is a straight surface, and fit surface 12Ca2 of outer circumferential fit surface 12Ca in Fig. 11 that is to be press-fit is a straight surface. In both of Figs. 10 and 11, fit surface 12Ca1 and fit surface 12Ca2 may both be a straight surface. This facilitates the press working. It is preferable that the portion of outer circumferential fit surface 12Ca that is involved in the press-fit is longer in axial dimension than the portion of first cut-away portion 3a that is involved in the press-fit. This is because the shape of outer circumferential fit surface 12Ca is made stable by making the straight dimension of outer circumferential fit surface 12Ca of cage member 12 longer. Cage members 12 having respective shapes shown in Figs. 10 and 11 are suitable for mass production.

As long as the present embodiment has a feature that a part of the first fit surface and a part of the second fit surface are in contact with each other and another part of the first fit surface and another part of the second fit surface are not in contact with each other, the present embodiment also has the same function/effect of making the posture of sensor unit 6 stable, like Embodiment 1.

### (Embodiment 5)

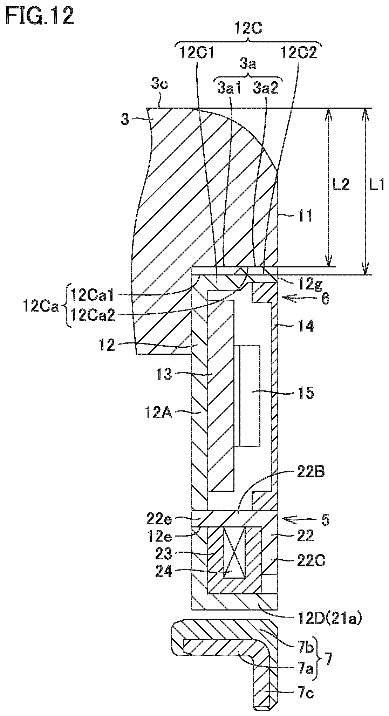

Fig. 12 is an enlarged cross-sectional view, particularly of a sensor unit and a magnetic ring according to Embodiment 5. Referring to Fig. 12, the present embodiment basically has the same configuration as that of Embodiment 1 in Fig. 3. However, in the present embodiment, first cut-away portion 3a has no step between cut-away portion 3a1 and cut-away portion 3a2, and is entirely flat in the axial direction. In this respect, the present embodiment is different from Embodiment 1 (1 to 4) in which a step is provided between cut-away portion 3a1 and cut-away portion 3a2. L1 and L2 in Fig. 12 are basically the same as L1 and L2 in Fig. 3, except that L2 also represents the distance from outermost surface 3c to cut-away portion 3a1 in addition to the distance from outermost surface 3c to cut-away portion 3a2 and the distance therefrom to fit surface 12Ca2, in contrast to Fig. 3.

As long as the present embodiment has a feature that a part of the first fit surface and a part of the second fit surface are in contact with each other and another part of the first fit surface and another part of the second fit surface are not in contact with each other, the present embodiment also has the same function/effect of making the posture of sensor unit 6 stable, like Embodiment 1.

### (Appendixes)

In the following, embodiments to be disclosed herein are described one by one.
(1) A bearing device 1 comprising: a bearing 2 including an outer ring 3, an inner ring 4, and a rolling element 8; a sensor unit 6 that is fixed to a stationary ring being one of the outer ring 3 or the inner ring 4, and retains a sensor that monitors a state of the bearing 2, wherein the sensor unit 6 includes a cage member 12 including a side plate portion 12A and a circumferential portion (outer circumferential portion 12C, inner circumferential portion 12D) extending in a direction crossing the side plate portion 12A, the circumferential portion of the cage member fits in the stationary ring, the circumferential portion includes a first fit surface (outer circumferential fit surface 12Ca, inner circumferential fit surface 12Da) that fits in the stationary ring, and the stationary ring includes a second fit surface (first cut-away portion 3a, second cut-away portion 4a) that fits on the circumferential portion, and a part of the first fit surface and a part of the second fit surface are in contact with each other and another part of the first fit surface and another part of the second fit surface are spaced from each other.
(2) The bearing device 1 according to (1), wherein the first fit surface has a step formed in such a manner that a distance from a surface (outermost surface 3c, innermost surface 4c) of the stationary ring, which is radially opposite to a surface (outer ring raceway surface 3b, inner ring raceway surface 4b2) of the stationary ring contacting the rolling element 8, to a side of the first fit surface adjacent to an opening 12g opposite to the side plate portion 12A, is smaller than the distance to a side of the first fit surface adjacent to the side plate portion 12A in an axial direction.
(3) The bearing device 1 according to (1) or (2), wherein the second fit surface has a step formed in such a manner that a distance from a surface of the stationary ring, which is radially opposite to a surface of the stationary ring contacting the rolling element, to a side (end face 11, 20 side) of the second fit surface opposite to the rolling element 8, is larger than the distance to a side of the second fit surface adjacent to the rolling element 8 in an axial direction.
(4) The bearing device 1 according to (1) or (2), wherein the second fit surface has a step formed in such a manner that a distance from a surface of the stationary ring, which is radially opposite to a surface of the stationary ring contacting the rolling element 8, to a side (end face 11, 20 side) of the second fit surface opposite to the rolling element 8, is smaller than the distance to a side of the second fit surface adjacent to the rolling element 8 in an axial direction.
(5) The bearing device 1 according to any one of (1) to (4), wherein the sensor unit 6 is fixed to the stationary ring without extending axially outward beyond an end face 11, 20 of the stationary ring.
(6) The bearing device 1 according to any one of (1) to (5), further comprising: a magnetic ring 7 that is fixed to a rotatable ring being one of the outer ring 3 or the inner ring 4, and has N and S poles magnetized alternately; a stator 5 that houses a coil 24 (it is particularly a part of stator 5A and stator 5B that houses coil 24) and includes, as a component, the cage member 12 fixed to the stationary ring in such a manner that the cage member faces the magnetic ring 7 in a radial direction of the bearing 2; a wireless communication circuit 18 that wirelessly transmits an output of the sensor to an outside; a power supply circuit 17 capable of adjusting an output of a generator G constituted of the magnetic ring 7 and the stator 5; and a circuit board 13 on which the sensor, the wireless communication circuit 18, and the power supply circuit 17 are mounted.
(7) The bearing device 1 according to (6), wherein the magnetic ring 7, the coil 24, and the circuit board 13 are spaced from each other on an imaginary straight line L extending in the radial direction of the bearing 2.

### (Supplementary Notes)

Features described in connection with (respective examples included in) respective embodiments described above may be combined appropriately to the extent that does not cause technical inconsistency.

It should be construed that the embodiments disclosed herein are given by way of illustration in all respects, not by way of limitation. It is intended that the scope of the present invention is defined by claims, not by the description above, and encompasses all modifications and variations equivalent in meaning and scope to the claims.

### REFERENCE SIGNS LIST

1 bearing device; 2 bearing; 3 outer ring; 3a first cut-away portion; 3a1, 3a2, 4a1, 4a2 cut-away portion; 3b outer ring raceway surface; 3c outermost surface; 3d radially inner surface; 3n, 4n clearance; 4 inner ring; 4a second cut-away portion; 4b radially outer surface; 4b2 inner ring raceway surface; 4c innermost surface; 5, 5A, 5B stator; 6 sensor unit; 7 magnetic ring; 7a core metal; 7b multipolar magnet; 7c flange portion; 8 rolling element; 9 cage; 10 seal; 11, 20 end face; 12 cage member; 12A side plate portion; 12b back surface; 12C, 22B outer circumferential portion; 12C1 first outer circumferential portion; 12C2 second outer circumferential portion; 12Ca outer circumferential fit surface; 12Ca1, 12Ca2, 12Da1, 12Da2 fit surface; 12D, 22D inner circumferential portion; 12D1 first inner circumferential portion; 12D2 second inner circumferential portion; 12Da inner circumferential fit surface; 12e hole; 12f front surface; 12g opening; 13 circuit board; 14 lid; 15 acceleration sensor; 16 temperature sensor; 17 power supply circuit; 18 wireless communication circuit; 18a antenna portion; 19 screw; 21, 22 magnetic member; 21a, 22a claw portion; 22C end face portion; 23 bobbin; 24 coil; 25 terminal; G generator; O rotation axis.

## Claims

1. A bearing device comprising:
a bearing including an outer ring, an inner ring, and a rolling element;
a sensor unit that is fixed to a stationary ring being one of the outer ring or the inner ring, and retains a sensor that monitors a state of the bearing, wherein
the sensor unit includes a cage member including
a side plate portion and
a circumferential portion extending in a direction crossing the side plate portion,
the circumferential portion of the cage member fits in the stationary ring,
the circumferential portion includes a first fit surface that fits in the stationary ring, and the stationary ring includes a second fit surface that fits on the circumferential portion, and a part of the first fit surface and a part of the second fit surface are in contact with each other and another part of the first fit surface and another part of the second fit surface are spaced from each other.

2. The bearing device according to claim 1, wherein the first fit surface has a step formed in such a manner that a distance from a surface of the stationary ring, which is radially opposite to a surface of the stationary ring contacting the rolling element, to a side of the first fit surface adjacent to an opening opposite to the side plate portion, is smaller than the distance to a side of the first fit surface adjacent to the side plate portion in an axial direction.

3. The bearing device according to claim 1 or 2, wherein the second fit surface has a step formed in such a manner that a distance from a surface of the stationary ring, which is radially opposite to a surface of the stationary ring contacting the rolling element, to a side of the second fit surface opposite to the rolling element, is larger than the distance to a side of the second fit surface adjacent to the rolling element in an axial direction.

4. The bearing device according to claim 1 or 2, wherein the second fit surface has a step formed in such a manner that a distance from a surface of the stationary ring, which is radially opposite to a surface of the stationary ring contacting the rolling element, to a side of the second fit surface opposite to the rolling element, is smaller than the distance to a side of the second fit surface adjacent to the rolling element in an axial direction.

5. The bearing device according to claim 1 or 2, wherein the sensor unit is fixed to the stationary ring without extending axially outward beyond an end face of the stationary ring.

6. The bearing device according to claim 1 or 2, further comprising:
a magnetic ring that is fixed to a rotatable ring being one of the outer ring or the inner ring, and has N and S poles magnetized alternately;
a stator that houses a coil and includes, as a component, the cage member fixed to the stationary ring in such a manner that the cage member faces the magnetic ring in a radial direction of the bearing;
a wireless communication circuit that wirelessly transmits an output of the sensor to an outside;
a power supply circuit capable of adjusting an output of a generator constituted of the magnetic ring and the stator; and
a circuit board on which the sensor, the wireless communication circuit, and the power supply circuit are mounted.

7. The bearing device according to claim 6, wherein the magnetic ring, the coil, and the circuit board are spaced from each other on an imaginary straight line extending in the radial direction of the bearing.
